# EUROPEAN PATENT SPECIFICATION

(11) **EP 1 167 022 B1**
(45) Date of publication and mention of the grant of the patent: **01.09.2010**
(21) Application number: 00980043.4
(22) Date of filing: 11.12.2000
(51) Int. Cl.: B41C 1/00, H04N 1/46, H04N 1/60, B41F 33/00, G06F 3/12

(54) **PRINTING SYSTEM, SERVER CONTROLLER, AND UNIT CONTROLLER**
DRUCKSYSTEM, SERVOSTEUERUNG UND STEUEREINHEIT
SYSTEME D'IMPRESSION, SERVEUR GESTIONNAIRE CONTROLEUR D'UNITE

(30) Priority: 13.12.1999 JP 35276999
(43) Date of publication of application: 02.01.2002
(73) Proprietor: Dainippon Screen Mfg. Co., Ltd., Kyoto 602-8585 (JP)
(72) Inventor: YASUDA, Yukio, Dainippon Screen MFG. Co.,Ltd., 1-1, dori, Kamikyo-ku, Kyoto 602-8585 (JP)
(74) Representative: Wilhelms · Kilian & Partner Patentanwälte
(86) International application number: PCT/JP2000/008753
(87) International publication number: WO 2001/042013

(56) References cited:
- JP-A- 4 283 875
- JP-A- 8 095 228

## Description

### Technical Field

The present invention relates to a printing technique in a digital printing system, and more particularly, it relates to a technique for attaining improvement in efficiency of printing preparation processing such as rasterization.

### Background Technique

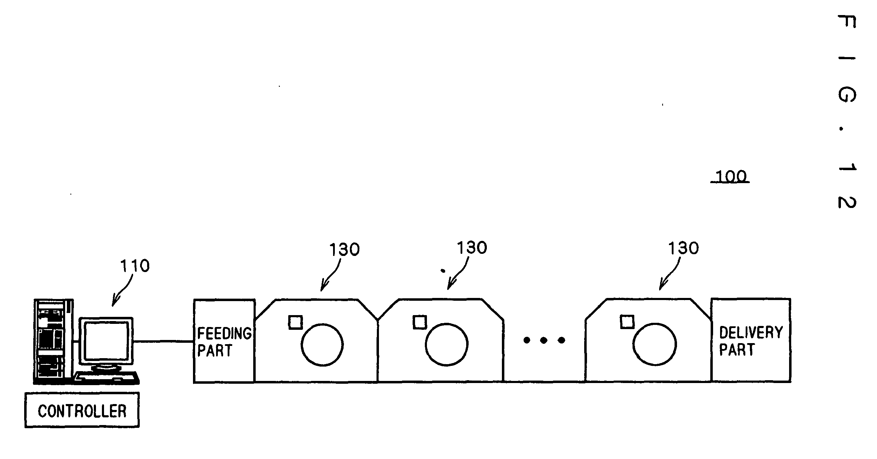

A printing system according to the preamble of claim 1, performing print processing with plates of a plurality of color components when performing creation of printed matter of multi-color printing is known from JP-A-10272756. Fig. 12 is a diagram showing an exemplary conventional digital printing system 100. In the digital printing system 100 shown in Fig. 12, a single controller 110 is connected with respect to a plurality of printing units 130. While actual print processing per plate corresponding to each of a plurality of color components is performed in each of the plurality of printing units 130 in a shared manner, creation processing of printing output data (separate plate data) per each color component performed by separating digital data of objective printed matter into a plurality of color components and rasterizing the same is performed in the single controller 110. In addition to such rasterize processing (separate plate data creation processing), this single controller 110 performs all processing necessary for printing preparation such as data transfer.

In such an apparatus, however, there is such a problem that, if the number of separate plate data (or the number of the printing units) increases, the time for performing this rasterize processing or printing preparation processing such as data transfer processing also increases to spend considerable time before printing preparation is completed.

### Disclosure of the Invention

The present invention aims at providing a printing system capable of attaining improvement in efficiency of printing preparation processing.

The present invention is directed to a printing system performing printing on the basis of digital data as defined in claim 1. It comprises a plurality of unit controllers and a server controller totally managing the plurality of unit controllers, while the server controller has command means commanding such purport that a process of creating a plurality of separate plate data is shared between the plurality of unit controllers, the plurality of separate plate data being created by separating digital data of objective printed matter into a plurality of color components and rasterizing the same, and each of the plurality of unit controllers has separate plate data creation means creating at least one separate plate data among the plurality of separate plate data from the digital data of the objective printed matter on the basis of the command by the command means.

Each of the plurality of unit controllers creates at least one separate plate data among the plurality of separate plate data on the basis of the creation command for the separate plate data by the server controller, whereby efficiency of the processing can be improved by performing creation processing of the separate plate data in parallel dispersion.

The present invention is also directed to such an aspect that it further comprises a plurality of printing units corresponding to the plurality of unit controllers respectively, and each of the plurality of unit controllers transfers, with respect to the corresponding printing unit, at least one separate plate data whose printing output is taken charge of in the printing unit.

Each of the plurality of unit controllers transfers the separate plate data whose printing output is taken charge of in the printing unit to the corresponding printing unit, whereby efficiency of the processing by parallel dispersion can be improved in data transfer processing.

Further, the present invention is also directed to such an aspect that the server controller has separate plate data storage means storing the plurality of separate plate data created in the plurality of unit controllers, and each of the unit controllers transfers the separate plate data stored in the separate plate data storage means of the server controller to the printing unit provided in correspondence to each unit controller.

Thus, improvement in efficiency of the processing resulting from recycling the stored separate plate data can be attained.

The present invention is also directed to such an aspect that the server controller has monitoring means monitoring work contents of each of the plurality of unit controllers.

Therefore, it is possible to implement monitoring related to work of the unit controllers by the server controller.

Further, the present invention is also directed to a printing method as defined in claim 5.

The object, features, aspects and advantages of the present invention will become more apparent from the following detailed description and the accompanying drawings.

### Brief Description of the Drawings

Fig. 1 is a diagram showing the outline of the system structure of a printing system 1 according to the present invention.
Fig. 2 is a conceptual diagram showing the hardware structure of a server controller 10.
Fig. 3 is a functional block diagram of the server controller 10 and unit controllers 20.
Fig. 4 is a flow chart related to operations of the server controller 10.
Fig. 5 is a flow chart related to operations of each unit controller 20.
Fig. 6 is a flow chart related to operations of each unit controller 20.
Fig. 7 is a diagram making illustration as to communication (individual communication) between the server controller 10 and each unit controller 20.
Fig. 8 is a diagram making illustration as to communication (broadcast) between the server controller 10 and each unit controller 20.
Fig. 9 is a diagram making illustration as to creation processing of separate plate data.
Fig. 10 is a diagram making illustration as to printing output processing.
Fig. 11 is a diagram showing a modification of the printing system.
Fig. 12 is a diagram showing the outline of a conventional printing system.

### Best Mode for Carrying Out the Invention

### <A. System Structure>

### <Outline>

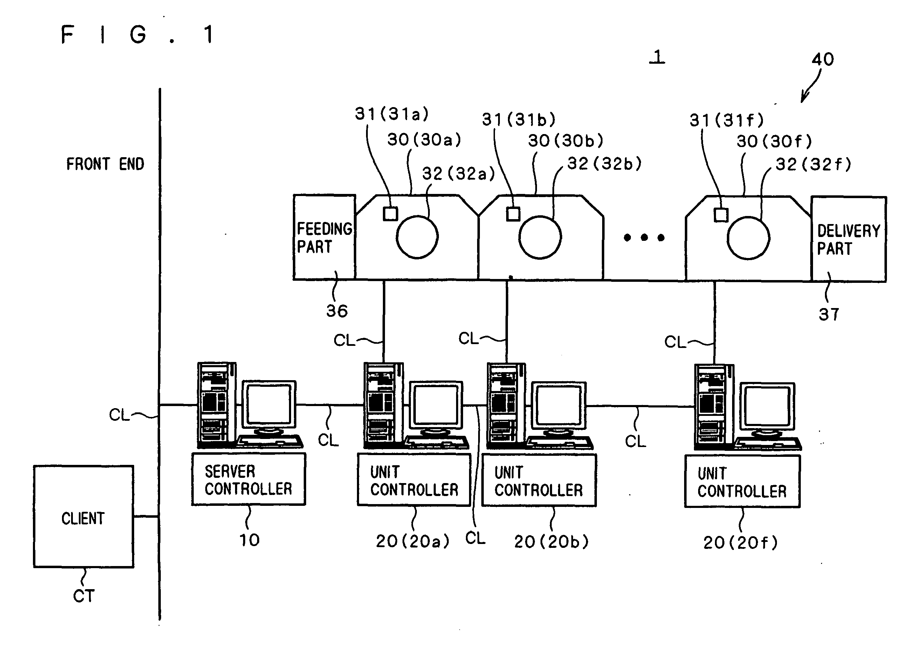

Fig. 1 is a diagram showing the outline of the system structure of a printing system 1 according to an embodiment of the present invention. This printing system 1 is a printing system separating a document such as a document or an image of multi-color printing (four-color printing of YMCA or six-color printing adding specific colors thereto, for example) to color components corresponding to respective plates and performing printing of a plurality of colors by the respective plates in a shared manner.

As shown in Fig. 1, this printing system 1 comprises a server controller 10, a plurality of (six here) unit controllers 20 (20a to 20f) and a plurality of printing units 30 (30a to 30f). At this point, the plurality of printing units 30 (30a to 30f) form a printing machine 40 also in association with a feeding part 36 and a delivery part 37 described later.

The server controller 10 is a printing control unit totally managing the plurality of unit controllers 20. As described later, this server controller 10 commands such purport that a process of creating a plurality of "separate plate data" with respect to digital data of objective printed matter is shared between the plurality of unit controllers 20. At this point, "separate plate data" means printing output data per each color component created by separating the digital data of the objective printed matter into a plurality of color components and rasterizing the same.

Each of the plurality of unit controllers 20 (20a to 20f) is a printing control unit managing the corresponding printing unit 30 among the plurality of printing units 30 (30a to 30f). Concretely, the printing unit 30a corresponds to the unit controller 20a, and the printing unit 30b corresponds to the unit controller 20b. Similarly, the printing units 30c to 30f correspond to the remaining unit controllers 20c to 20f respectively. As described later, the respective unit controllers 20a to 20f create a plurality of separate plate data from the digital data of the printed matter of the object in a shared manner on the basis of the creation command for the separate plate data from the server controller 10. Concretely, the respective unit controllers 20a to 20f create separate plate data employed for printing output processing in the corresponding printing units 30a to f respectively.

The plurality of printing units 30 (30a to 30f) in the printing machine 40 perform actual print processing (printing output processing) such as exposure and transfer based on the respective separate plate data under control of the corresponding unit controllers 20 (20a to 20f) respectively.

The server controller 10 and the plurality of unit controllers 20a to 20f are connected with each other through communication lines CL, and capable of transmitting/receiving various types of information, such as the digital data of the objective printed matter, the separate plate data created in the unit controllers 20 and the like, for example, to/from each other. Further, each unit controller 20 and the printing unit 30 corresponding to the unit controller 20 are connected with each other through a communication line CL, and capable of transmitting/receiving various types of information, such as document data (the digital data of the objective printed matter), for example, to/from each other.

In the following, the server controller 10, the unit controllers 20 and the printing machine 40 (including the printing units 30) etc. are described in further detail.

### <Server Controller 10>

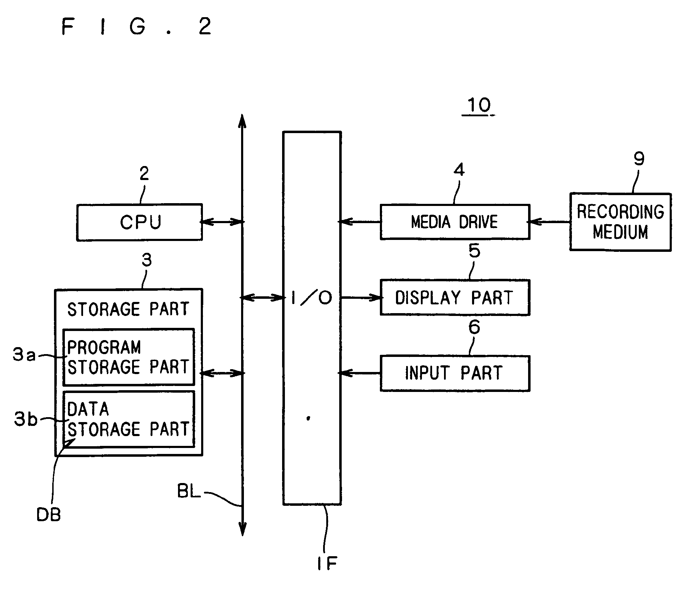

Fig. 2 is a conceptual diagram expressing the hardware structure of the server controller 10. The server controller 10 is a computer system comprising a CPU 2, a storage part 3 including a semiconductor memory and a hard disk etc., a media drive 4 reading information from various types of recording media, a display part 5 including a monitor and the like and a input part 6 including a keyboard and a mouse etc.

The CPU 2 is connected to the storage part 3, the media drive 4, the display part 5, the input part 6 and the like through a bus line BL and an input/output interface IF. Further, the media drive 4 reads from a portable recording medium 9 such as a CD-ROM, a DVD (Digital Versatile Disk) or a flexible disk information recorded therein. This computer system reads from the portable recording medium 9 recording a program the program, thereby having various types of functions described later. The storage part 3 has a program storage part 3a storing all or part of the read program and a data storage part 3b storing document data as digital data subjected to print processing and separate plate data after rasterization obtained by rasterizing the document data etc. as a database DB.

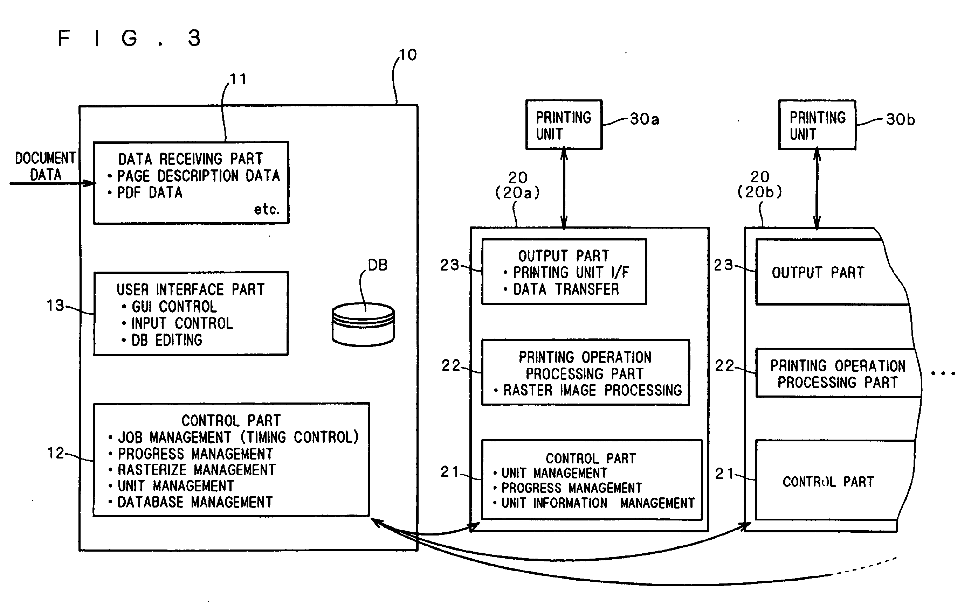

Fig. 3 is a functional block diagram in the printing system 1. The server controller 10 has respective functions such as a data receiving part 11, a control part 12 and a user interface part 13 etc., and details of the functions of these respective parts are hereafter described with reference to Fig. 3.

In the data receiving part 11, it receives document data transmitted from a client CT (see Fig. 1) described later arranged on a front end.

The control part 12 implements various types of functions such as a job management function which is management of execution of a printing job including timing control, a progress management function which is management of the situation of progress of the printing job in each printing unit 30, a rasterize management function which is management of the situation of execution of rasterization in each unit controller 20, a unit management function performing management per printing unit 30, and a database management function performing management of the database related to various types of information etc. while performing transmission/receiving of data to/from each unit controller 20.

Among these, the rasterize management function also has a function of commanding such purport that a process of creating the plurality of separate plate data is shared between the plurality of unit controllers 20, the plurality of separate plate data being created by separating the digital data of the objective printed matter into the plurality of color components and rasterizing the same, and in this sense, the control part 12 functions also as a command part commanding creation of the separate plate data to each unit controller 20.

In this creation command for the separate plate data, the corresponding color component is specified per each unit controller 20, and a command for such purport that separate plate data related to the color component is to be created from the digital data of the objective printed matter is transmitted per each unit controller 20. In the case where printing output processing related to respective separate plate data of a "Y (yellow)" plate, an "M (magenta)" plate, a "C (cyan)" plate, a "K (black)" plate, a "GD (gold)" plate and an "SV (silver)" plate is performed in the respective printing units 30a to 30f (see also Fig. 1) respectively, for example, the server controller 10 transmits commands for such purport that separate plate data related to the respective color components of "Y", "M", "C", "K", "GD" and "SV" are to be created to the unit controllers 20a to 20f respectively. "Gold" and "silver" illustrate specific colors other than YMCK, and it is needless to say that other colors may be employed as specific colors.

In the user interface part 13 (Fig. 3), it has a GUI control function which is control of display by a GUI (Graphical User Interface), an input control function and an edit function of the database. According to this user interface part 13, it is possible to display the situation of progress of printing and display or change various types of information such as additional information (the number of printing and the date of delivery) related to printed matter with the respective functions.

### <Unit Controller 20>

The unit controllers 20 are now described. Each unit controller 20 is a computer system having a hardware structure similar to the aforementioned server controller 10. Although it is common in a point comprising a CPU, a memory and the like, however, it may not comprise a display or a keyboard etc. in relation to input/output in a display part and an input part etc. but may be structured to perform various types of input/output operations by the server controller 10 through the communication line CL, for example. Concretely, each unit controller 20 may be structured as an embedded computer, and may be structured to perform display or change of data in each unit controller 20 with the input/output function of the server controller 10 through a communication function with the server controller 10.

The functions of each unit controller 20 are described with reference to the functional block diagram of Fig. 3. Each unit controller 20 has respective functions of a control part 21, a printing operation processing part 22 and an output part 23.

The control part 21 implements a management function for the printing unit 30, a progress management function for the printing unit 30 and a unit information management function in the printing unit 30 while performing transmission/receiving of data to/from the corresponding printing unit 30. As this unit information management function, management of various types of parameters (parameters for fine control requiring setting per each printing unit 30 etc.) in printing output processing in each printing unit 30, for example, is included.

The control part 21 is preferably structured to be capable of also totally managing the respective ones of various functions with respect to the printing unit 30 in the server controller 10 by performing transmission/receiving of data to/from the server controller 10. For example, the server controller 10 is capable of monitoring various parameters and operating situations related to each printing unit 30 managed in each unit controller 20 by the unit information management function of the controller 21 of each unit controller 20 with the input part 6 and/or the display part 5 of the server controller 10 by communication through the communication line CL.

In the printing operation processing part 22, separate plate data with respect to the digital data of the objective printed matter is generated. Concretely, separate plate data related to one color component set by the server controller 10 as that to be created by the unit controller 20 is created.

At this point, this creation of the separate plate data is performed on the basis of the creation command from the server controller 10, and creation of the corresponding separate plate data is performed per each of the unit controllers 20a to 20f on the basis of the digital data of the objective printed matter. When the aforementioned creation commands from the server controller 10 are transmitted to the respective unit controllers 20a to 20f, for example, separate plate data related to the respective color components of "Y", "M", "C", "K", "GD" and "SV" are created in the respective unit controller 20a to 20f from the digital data of the objective printed matter respectively. At this point, this creation processing (raster image processing) of the separate plate data is shared between in the plurality of unit controllers 20, whereby an effect of improvement in efficiency of the processing by parallel dispersion can be attained.

The output part 23 serves as an interface with the printing unit 30 corresponding to the unit controller 20, and performs data transfer to the printing unit 30 and the like. The separate plate data created in the printing operation processing part 22 with raster image processing is transferred to the printing unit 30 through the output part 23 of each unit controller 20.

### <Printing Machine 40>

In the printing machine 40, as shown in Fig. 1, the feeding part 36 automatically performing feeding is mounted on the most upstream side, and the delivery part 37 automatically sorting or storing discharged printed matter is mounted on the most downstream side. The plurality of (six here) printing units 30 (30a to 30f) are serially coupled between the feeding part 36 and the delivery part 37.

The respective printing units 30a to 30f have exposure heads 31a to 31f performing exposure of the plates and printing mechanisms 32a to 32f performing printing with the plates obtained by these exposure heads 31a to 31f therein respectively, and perform printing output processing as to the respective ones of a plurality of printing colors. These respective printing units 30a to 30f perform printing output processing on the basis of the separate plate data transferred from the corresponding unit controllers 20a to 20f. For example, the printing unit 30a performing printing output processing corresponding to the "Y" plate corresponds to the unit controller 20a creating separate plate data related to the "Y" plate, and performs printing output processing on the basis of the separate plate data related to the "Y" plate transferred from the unit controller 20a. Similarly, the remaining printing units 30b to 30f also perform printing output processing on the basis of the respective separate plate data of the "M" plate, the "C" plate, the "K" plate, the "GD" plate and the "SV" plate transferred from the corresponding unit controllers 20b to 20f respectively.

### <Client CT>

This printing system 1 (see Fig. 1) further comprises the client CT connected to the server controller 10 through the communication line CL. The client CT is a computer system having a hardware structure similar to the aforementioned server controller, and comprises an internal structure of a CPU, a memory, a hard disk etc. and peripheral devices such as a color display as a display part, a keyboard as a input part etc.

This client CT is capable of creating and editing document data (the digital data of the objective printed matter) such as data by a page description language, PDF data and the like and preserving the same in the internal hard disk or transmitting these data to the server controller 10 through the communication line CL. Further, the client CT is also capable of performing operations such as registration of the printing job specifying document data to be subjected to printing output and making a printing output instruction.

### <B. Operation>

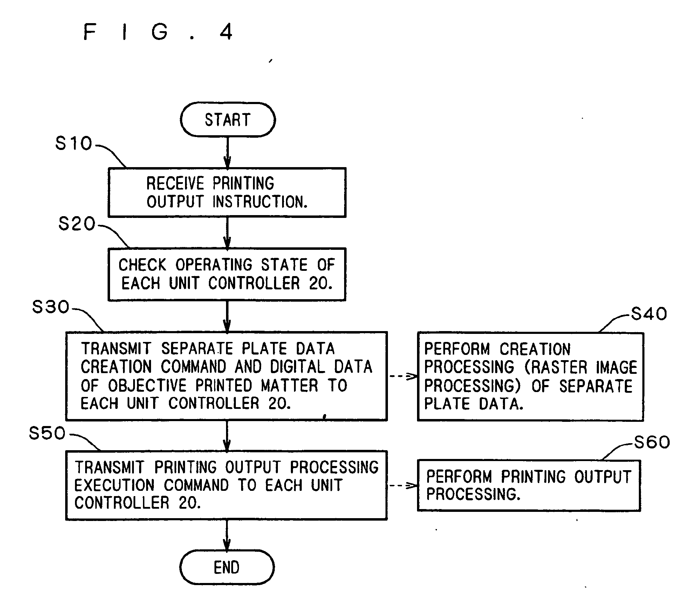

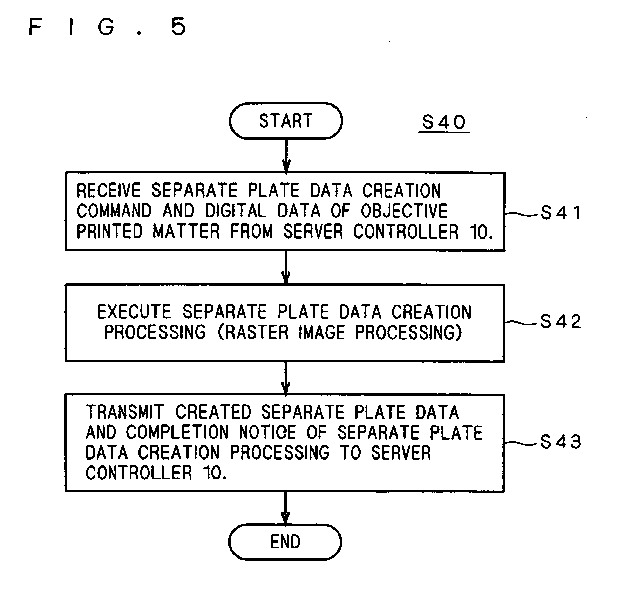

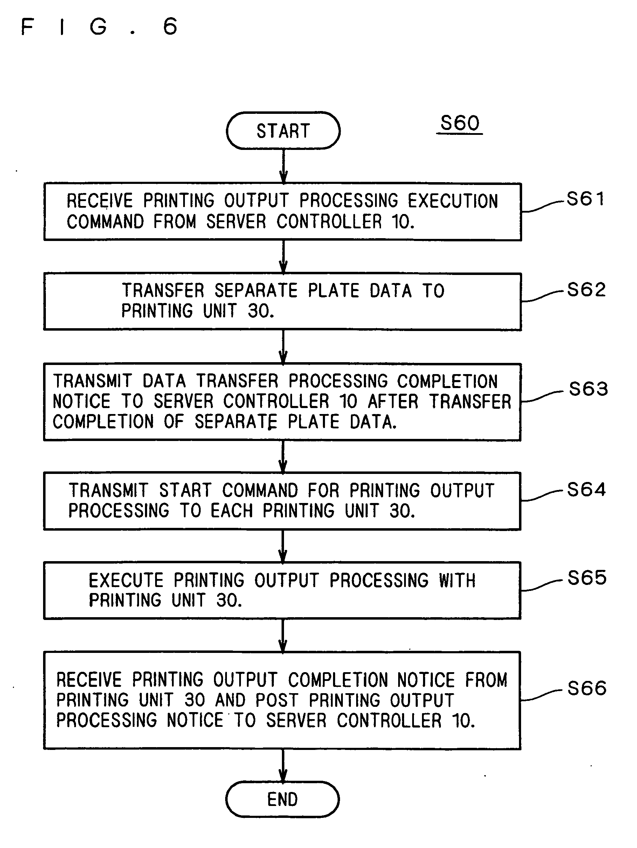

Fig. 4 is a flow chart related to operations of the server controller 10 in the printing system 1, and Fig. 5 and Fig. 6 are flow charts related to operations of each unit controller 20. A print processing operation in the printing system 1 is now described with reference to these figures.

First, the server controller 10 receives a printing output instruction from the client CT at a step S10. This printing output instruction includes the digital data of the objective printed matter transmitted from the client CT to the server controller 10 on the basis of a registration operation of the printing job in the client CT.

Then, the server controller 10 checks the operating state of each unit controller 20 at a step S20. Concretely, it inquires whether or not each unit controller 20 is in a ready state by communication through the communication line CL.

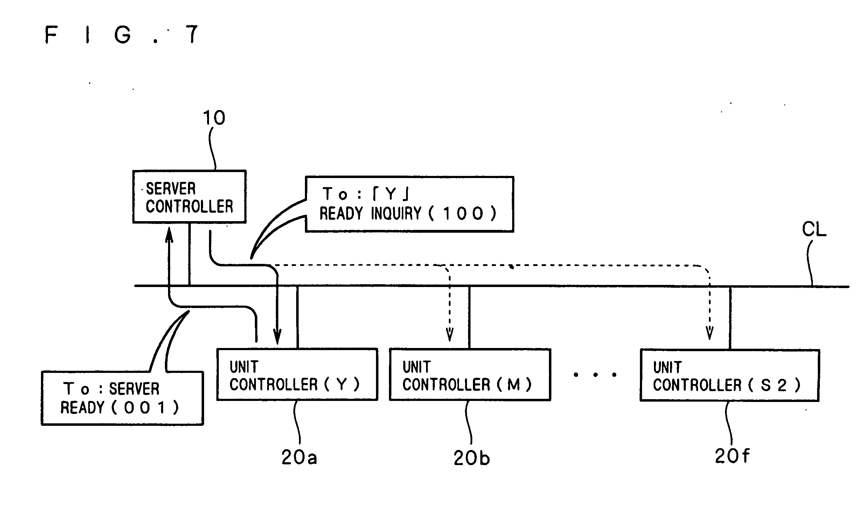

Fig. 7 is a diagram making illustration as to the communication between the server controller 10 and each unit controller 20. This communication is performed by packet communication employing data having a data structure including "transmission destination" and "instruction command".

For example, the unit controller 20a performing creation of separate plate data related to the "Y (yellow)" plate etc. is specified as the transmission destination (destination), and it transmits data having "instruction command (transmission contents)" of purport inquiring whether or not it is in a ready state, as shown in Fig. 7. This "instruction command" can be supplied as a symbolic number associated with specific contents. For example, it is possible to transmit an instruction command inquiring whether or not it is in a ready state in association with a number "100". Further, the "transmission destination" is supplied by previously providing an identification code specifying the unit controller performing creation of the separate plate data related to the "Y" plate etc. to the unit controller 20a and specifying the corresponding identification code. As this identification code, an address or a name (for example, "yellow") uniquely allocated to each unit controller 20 or the like can be employed.

The plurality of unit controllers 20 receiving data of such contents receive only packets including themselves as transmission destinations and perform return operations in response to the received contents. In Fig. 7, such a case is shown that only the unit controller 20a specified as the transmission destination receives the aforementioned inquiry data and returns data of contents of ready "0001" to the server controller 10. If it is not ready, another symbolic number (for example, "000") expressing purport of unready is returned. In this case, it is possible to confirm that it has entered a ready state by such an operation that the server controller 10 repeats re-inquiry at prescribed intervals or the like.

When it is confirmed that each unit controller 20 is in a ready state at a step S20 (Fig. 4), the server controller 10 transmits a creation command for separate plate data to each unit controller 20 (step S30). At this time, the server controller 10 specifies the type of the separate plate data to be created per each unit controller 20, and transmits a creation start command for the separate plate data along with the digital data of the objective printed matter.

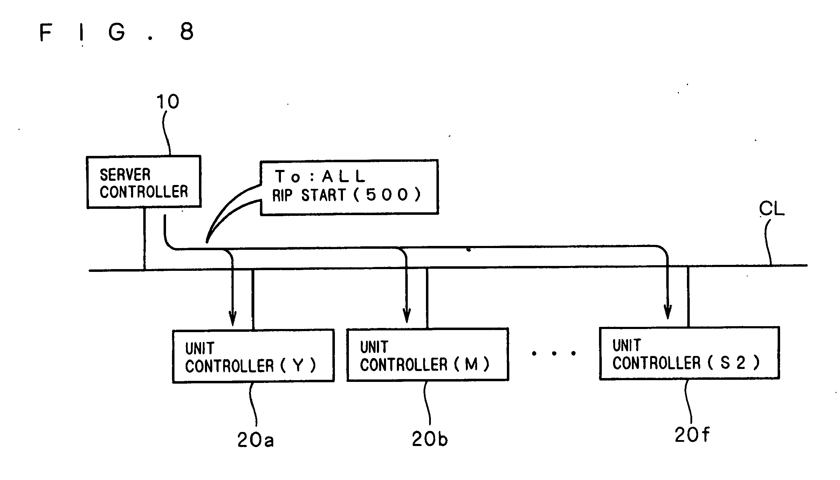

As to this creation command for the separate plate data, it may transmit a command including specification of the type of the separate plate data to be created and a sign of creation start per each unit controller 20, or may transmit commands of such purport that creation of separate plate data must be started to all unit controllers 20 after previously transmitting a command of purport specifying the type of the separate plate data per each unit controller 20. Further, it may transmit the digital data of the objective printed matter to the unit controllers 20 in advance. Alternatively, it may transmit the digital data of the objective printed matter to the unit controllers 20 without through the serve controller 10. In the case of transmitting the creation commands for the separate plate data to all unit controllers 20, it is possible to transmit the same to all of the plurality of unit controllers 20 by specifying "ALL (all)" as the transmission destinations, as shown in Fig. 8. In Fig. 8, such a case is illustrated that a symbolic number "500" expressing a start command for creation processing (RIP processing) of the separate plate data is transmitted as data to all unit controllers 20.

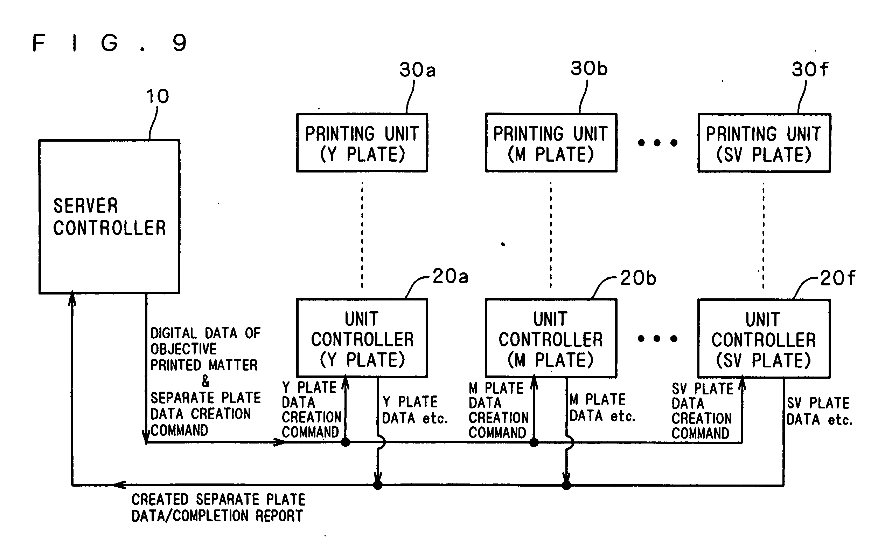

In each unit controller 20 receiving the aforementioned creation command, creation processing of the separate plate data at a step S40 is performed. In the following, description is made on the processing at the step S40 with reference to a flow chart of Fig. 5 showing detailed operations of each unit controller 20 and an operation explanatory diagram of Fig. 9.

First, the unit controller 20 receiving the separate plate data creation command and the digital data of the objective printed matter from the server controller 10 at a step S41 (Fig. 5) performs raster image processing and executes separate plate data creation processing on the basis of the creation command at a subsequent step S42. More concretely, creation commands of such purport that the separate plate data for the "Y" plate, the "M" plate, the "C" plate, the "K" plate, the "GD" plate and the "SV" plate are to be created are transmitted from the server controller 10 to the respective unit controllers 20a to 20f respectively, and the respective separate plate data for the "Y" plate, the "M" plate, the "C" plate, the "K" plate, the "GD" plate and the "SV" plate are created in the respective unit controllers 20a to 20f according to the command contents thereof respectively, as also shown in Fig. 9. When the separate plate data creation processing is completed, the respective unit controllers 20a to 20f transmit the created respective separate plate data to the server controller 10, while transmitting completion notices of the creation processing of the separate plate data to the sever controller 10 (step S43).

Such creation processing of the separate plate data is performed in the plurality of unit controllers 20 (20a to 20f) in a parallel manner and a plurality of separate plate data are created by parallel dispersion processing, whereby efficiency of the processing can be improved such that the time required for generation of the separate plate data can be reduced as compared with the case of creating all separate plate data in a single controller.

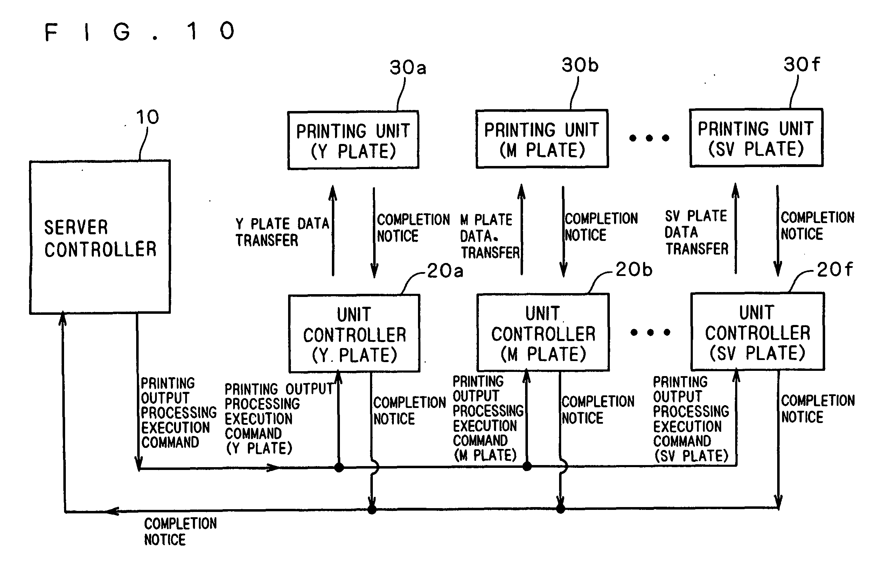

Fig. 4 is referred to again. When receiving the creation processing completion notice of the separate plate data from each unit controller 20, the server controller 10 this time transmits an execution command for printing output processing to each unit controller 20 (step S50). Each unit controller 20 receiving this command executes various types of processing at a step S60 in correspondence to each command. The processing at this step S60 is hereafter described in detail with reference to a flow chart of Fig. 6 and an operation explanatory diagram of Fig. 10.

As shown in Fig. 6, each controller 20 receives the printing output processing execution command transmitted from the server controller 10 at a step S61, and transfers each separate plate data to each printing unit 30 corresponding thereto in response to the received execution command (step S62). For example, the unit controller 20a receiving the printing output processing execution command transfers Y plate data which is the separate plate data related to the "Y" plate temporarily stored (stored) in the server controller 10 to the printing unit 30a, as also shown in Fig. 10. Similarly, respective separate plate data related to the remaining "M" plate, "C" plate, "K" plate, "GD" plate and "SV" plate are transferred by the respective unit controllers 20b to 20f to the corresponding printing units 30b to 30f. In this case, the respective ones of the plurality of unit controller 20a to 20f transfer the separate plate data whose printing output is taken charge of in the printing units 30a to 30f to the corresponding printing units 30a to 30f, whereby a load in data transfer is reduced as compared with such a case that a single controller independently transfers the same to each printing unit. In other words, efficiency of the processing can be improved by parallel dispersion in data transfer processing.

When this transfer of the separate plate data is completed, it transmits a data transfer processing completion notice to the server controller 10 (step S63). Due to this completion notice, the server controller 10 recognizes that printing preparation has been completed in relation to the unit controller 20 and the printing unit 30. The server controller 10 can grasp the situation of progress of operations in each unit controller 20 on the basis of a report of various types of operations such as this completion notice of data transfer processing from the unit controller 20.

At a step S64, a start instruction of such purport that printing output processing must be started is transmitted from each unit controller 20 to each printing unit 30, whereby printing output processing (step S65) in each printing unit 30 is started. Thus, printing output by the plates is performed with an exposure operation and an ink transfer operation etc.

When the printing output processing is completed, each printing unit 30 transmits a printing output completion notice to the corresponding unit controller 20 at a step S66, and each unit controller 20 receiving the printing output completion notice further transmits the printing output processing completion notice to the server controller 10. The server controller 10 can confirm that processing in the unit controller 20 and the printing unit 30 is in a completed state by receiving this completion notice, and it is possible to implement progress management by the server controller 10.

Thus, the server controller 10 has the monitoring function performing various types of monitoring operations including the aforementioned progress management in relation to the states of each unit controller 20 and the printing unit 30. While the case of grasping the state of progress of the operation by receiving the completion notice from the unit controller 20 side has been described in the aforementioned monitoring operation related to the progress management, the server controller 10 may contrarily inquire the state of progress to the unit controller 20. In other words, it may perform such transmission/receiving of data that the unit controller 20 makes a report related to the actual situation of progress (operating state as to whether it is in operation or in operation completion) to the server controller 10 with respect to an inquiry made by the server controller 10 to the unit controller 20 in relation to the situation of progress of the operation. Thus, the server controller 10 can monitor the situation of progress of the operation.

As the monitoring function, it is also possible to perform grasp of set values of various types of parameters of each printing unit 30 managed in each unit controller 20 or the like in addition to such grasp of the situation of progress of the operation.

According to the printing system 1 according to this embodiment, as hereinabove described, each of the plurality of unit controllers 20 creates at least one separate plate data among the plurality of separate plate data from the digital data of the objective printed matter on the basis of the creation command for the separate plate data by the server controller 10, whereby efficiency of the processing can be improved by performing the creation processing of the separate plate data in parallel dispersion.

Further, each of the plurality of unit controllers 20 transfers the separate plate data whose printing output is taken charge of in the printing unit 30 to the corresponding printing unit 30, whereby it is also possible to attain improvement in efficiency of the processing by parallel dispersion in data transfer processing.

### <C. Modification etc.>

While it has performed the printing operation related to a single color component per each printing unit 30 in the aforementioned embodiment, the present invention is not restricted to this but it may perform a printing operation related to at least two color components per each printing unit 30.

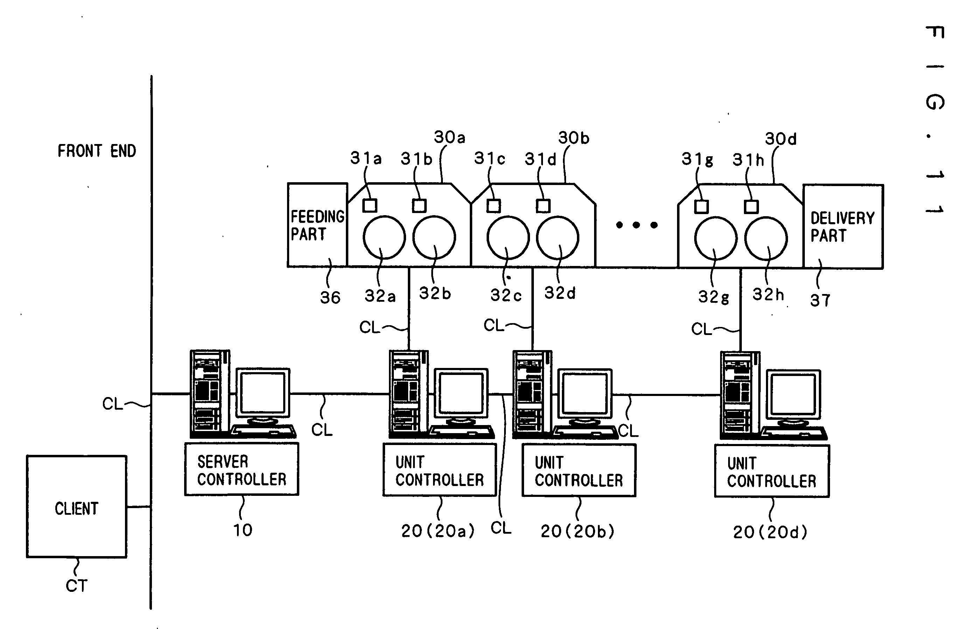

Fig. 11 is a diagram showing a modification of the printing system. In the printing system according to this modification, it performs printing related to two color components in each of respective printing units 30. In this case, processing such as that creating separate plate data related to two color components respectively or the like is performed in a corresponding unit controller 20 managing each printing unit 30.

Concretely, this printing system comprises four printing units 30a to 30d, and each of the printing units 30a to 30d has two exposure heads and two printing mechanisms performing printing by plates obtained by these two exposure heads respectively. For example, the printing unit 30a has two exposure heads 31a and 31b and printing mechanisms 32a and 32b performing printing by plates obtained by these two exposure heads 31a and 31b, and the printing unit 30b has two exposure heads 31 c and 31d and two printing mechanisms 32c and 32d performing printing by plates obtained by these two exposure heads 31c and 31d. In this printing system, it is possible to implement eight-color printing employing eight plates in total by performing printing output related to two color components in each of the four printing units 30.

Four unit controllers 20a to 20d are provided for these four printing units 30a to 30d, and each unit controller 20 performs management of print processing of the corresponding printing unit 30. Further, each unit controller 20 performs creation processing of separate plate data employed for printing output processing performed in the corresponding printing unit 30 and data transfer processing. Thus, efficiency of processing in separate plate data creation processing and data transfer processing can be improved, similarly to the aforementioned embodiment.

While each unit controller 20 has created the separate plate data by performing color separation processing of separating the digital data (document data) of the objective printed matter received with the creation command for the separate plate data from the server controller 10 into each color component and raster image processing of rasterizing the data subjected to color separation processing in the aforementioned embodiment, it is not restricted to this.

For example, the server controller 10 may previously color-separate (separate into plates) into respective color components as to the digital data of the objective printed matter and thereafter transmit the digital data color-separated into the respective plates to the corresponding unit controllers 20 by packet communication respectively so that each unit controller 20 receiving this performs raster image processing on the data related to the corresponding color component. Also by this, each of the plurality of unit controllers 20 can create at least one separate plate data among a plurality of separate plate data from the digital data of the objective printed matter.

In this case, each unit controller 20 receiving the digital data of the objective printed mater after color separation can create each separate plate data of the digital data (document data) of the objective printed matter by performing only raster image processing without performing color separation processing, whereby a burden in the unit controller 20 can be reduced.

In the aforementioned embodiment, each separate plate data has been created in each unit controller 20, thereafter temporarily transferred to the server controller 10 and stored in the server controller 10. According to this, it is also possible to execute printing output processing by recycling previously created separate plate data in reprinting (republish) of identical data or the like, for example.

In particular, it becomes possible to readily cope also when the type of separate plate data generated in each unit controller 20 and the type of separate plate data actually subjected to generation processing in each unit controller 20 are different from each other. Also when printing order of respective color components in the respective printing units 30 is changed after creation processing of separate plate data, for example, it becomes possible to flexibly cope with the change of the printing order related to the color components by changing an ink to be charged into each printing unit 30 and transferring separate plate data corresponding to the color component after change to each printing unit 30 after changing the charged ink for executing printing output processing in each printing unit 30.

When not performing the aforementioned recycling of identical data or the like, the separate plate data may not necessarily be temporarily transferred to and stored in the server controller 10 but each unit controller 20 may create separate plate data per each printing of printed matter so that the unit controller 20 transmits the created separate plate data to the corresponding printing unit 30, for example. According to this, transmission/receiving of data between each unit controller 20 and each printing unit 30 can be directly performed without through the server controller 10, whereby it is possible to further progress load dispersion.

While the unit controller 20 has been structured to be connected with the server controller 10 through the communication line CL so that communication employing a communication system by wire is enabled in the aforementioned embodiment, it may be structured to be communicable with a communication system by radio.

Further, while it is assumed to indirectly perform operations such as registration of the printing job to the server controller 10 through the client CT in the aforementioned embodiment, the printing operation in the printing system 1 may be executed by directly performing registration of the printing job or the like with the server controller 10. Concretely, it is possible to directly make a printing instruction through the user interface part 13 (Fig. 3) of the server controller 10.

While the printing machine 40 has been illustrated as that of the system having an exposure head per each plate in the aforementioned embodiment, it may be that performing printing output processing per data (i.e., separate plate data) related to each color subjected to color separation, and may be of another system (for example, an ink jet system) having neither exposure head nor plate.

## Claims

1. A printing system (1) performing printing on the basis of digital data, comprising:
a server controller (10), **characterized by** further comprising
a plurality of unit controllers(20a, 20b, ..., 20f) totally managed by said server controller (10);
said server controller (10) comprising command generation means arranged to generate a command having a data structure including transmission destination and transmission contents; and
transmission means arranged to transmit said command from said server controller (10) to said plurality of unit controllers (20a, 20b, ..., 20f), and
each of said plurality of unit controllers (20a, 20b, ..., 20f) having separate plate data creation means for creating at least one separate plate data among a plurality of separate plate data from digital data of objective printed matter on the basis of said command generated by said command generation means,
said plurality of separate plate data being created by separating said digital data of said objective printed matter into a plurality of color components and rasterizing the same.

2. The printing system according to claim 1, further comprising :
a plurality of printing units (30a, 30b, ..., 30f) corresponding to said plurality of unit controllers respectively, wherein
each of said plurality of unit controllers (20a, 20b, ..., 20f) is arranged to transfer, with respect to the corresponding printing unit, at least one separate plate data whose printing output is taken charge of in said printing unit.

3. The printing system according to claim 2, wherein
said server controller(10) has separate plate data storage means storing said plurality of separate plate data created in said plurality of unit controllers (20), and
each of said unit controllers (20a, 20b, ..., 20f) is arranged to transfer the separate plate data stored in said separate plate data storage means of said server controller (10) to said printing unit provided in correspondence to each unit controller.

4. The printing system according to claim 3, wherein
said server controller (10) has monitoring means monitoring work contents of each of said plurality of unit controllers.

5. A printing method for performing printing on the basis of digital data using a printing system including a server controller (10), the printing method **characterized by** the steps of:
providing a plurality of unit controllers (20a, 20b, ..., 20f) totally managed by said server controller (10),
generating, by said server controller (10), a command having a data structure including transmission destination and transmission contents,
transmitting, according to said transmission destination, said command to at least one of said plurality of unit controllers (20a, 20b, ..., 20f), and
creating at least one separate plate data from digital data of objective printed matter in said at least one of said plurality of unit controllers (20a, 20b, ..., 20f), said separate plate data being created by separating said digital data of said objective printed matter into a plurality of color components and rasterizing the same.

## Patentansprüche

1. Drucksystem (1) zur Durchführung eines Druckens auf der Grundlage von digitalen Daten, aufweisend,
einen Server-Controller (10), **dadurch gekennzeichnet, dass** es ferner aufweist:
eine Anzahl von Einheiten-Controllern (20a, 20b, ..., 20f), die vollständig durch den Server-Controller (10) verwaltet werden;
wobei der Server-Controller (10) Befehlserzeugungsmittel aufweist, die für eine Erzeugung eines Befehls mit einer Datenstruktur, die ein Sendeziel und einen Sendeinhalt enthält, eingerichtet sind; und
Sendemittel, die für ein Senden des Befehls von dem Server-Controller (10) zu der Anzahl von Einheiten-Controllern (20a, 20b, ..., 20f) eingerichtet sind, und
wobei jeder der Anzahl von Einheiten-Controllern (20a, 20b, ..., 20f) gesonderte Plattendatenerzeugungsmittel zur Erzeugung wenigstens eines gesonderten Plattendatensatzes aus einer Anzahl von gesonderten Plattendaten aus digitalen Daten einer Zieldrucksache auf der Grundlage des von den Befehlserzeugungsmitteln erzeugten Befehls aufweist,
wobei die Anzahl gesonderter Plattendaten durch Trennung der Digitaldaten der Zieldrucksache in eine Anzahl von Farbkomponenten und Rasterisierung derselben erzeugt sind.

2. Drucksystem nach Anspruch 1, welches ferner aufweist:
eine Anzahl von Druckeinheiten (30a, 30b,.., 30f), die der Anzahl von Einheiten-Controllern entspricht, wobei
jeder der Anzahl von Einheiten-Controllern (20a, 20b, ..., 20f) für die Übertragung, in Bezug auf die entsprechende Druckeinheit, wenigstens eines gesonderten Plattendatensatzes, dessen Druckausgabe in der Druckeinheit verarbeitet wird, eingerichtet ist.

3. Drucksystem nach Anspruch 2, wobei
der Server-Controller (10) Speichermittel für gesonderte Plattenraten aufweist, die die Anzahl von gesonderten Plattendaten, die in der Anzahl von Einheiten-Controllern (20) erzeugt worden sind, speichern, und
jeder der Einheiten-Controller (20a, 20b, ..., 20f) für eine Übertragung der in den Speichermitteln des Server-Controllers (10) für gesonderte Plattendaten gespeicherten gesonderten Plattendaten auf die Druckeinheit, die in Entsprechung zu einem jeden Einheiten-Controller vorgegehen ist, eingerichtet ist.

4. Drucksystem nach Anspruch 3, wobei
der Server-Controller (10) Überwachungsmittel, die Arbeitsinhalte eines jeden der Anzahl von Einheiten-Controllern überwachen, aufweist.

5. Druckverfahren zur Durchführung eines Druckens auf der Grundlage von digitale Daten unter Verwerdung eines Drucksystems, welches einen Server-Controller (10) enthält, wobei das Druckverfahren durch folgende Schritte gekenntzeichnet ist:
Vorstehen einer Anzahl von Einheiten-Controllern (20a, 20b, ..., 20f), die vollstandig durch den Server-Controller (10) verwaltet werden,
Erzeugen, mit dem Server-Controller (10), eines Befehls, welcher eine Datenstruktur aufweist, die ein Sendeziel und einen Sendeinhalt enthält,
Senden, gemäß dem Sendeziel, des Befehls an weinigstens einen der Anzahl von Einheiten-Controllern (20a, 20b, ..., 20f), und
Erzeugen wenigstens eines gesonderten Plattendatensatzes aus Digitaldaten einer Zieldrucksache in wenigstens einem der Anzahl von Einheiten-Controllern (20a, 20b, ..., 20f), wobei die gesonderten Plattendaten durch Trenner der Digitaldaten der Zieldrucksache in eine Anzahl von Farbkomponenten und Rasterisierung derselben erzeugt werden.

## Revendications

1. Système d'impression (1) assurant l'impression sur la base de données numériques, comprenant :
un serveur gestionnaire (10), **caractérisé en ce qu'**il comprend en outre
une pluralité de contrôleurs d'unité (20a, 20b, ..., 20f) entièrement gérés par ledit serveur gestionnaire (10) ;
ledit serveur gestionnaire (10) comprenant des moyens de génération de commande conçus pour générer une commande ayant une structure de données comprenant la destination de transmission et le contenu de transmission ; et
des moyens de transmission conçus pour transmettre ladite commande depuis ledit serveur gestionnaire (10) à ladite pluralité de contrôleurs d'unités (20as 20b, ..., 20f), et
chacun de ladite pluralité de contrôleurs d'unité (20a, 20b, ..., 20f) possédant des moyens de création de données de plaques séparées pour créer au moins un ensemble de données de plaques séparées parmi une pluralité de données de plaques séparées à partir de données numériques du sujet imprimé objectif sur la base de ladite commande générée par lesdits moyens de génération de commande,
ladite pluralité de données de plaques séparées étant créée en séparant lesdites données numériques dudit sujet imprimé objectif en une pluralité de composantes chromatiques et en les rastérisant.

2. Système d'impression selon la revendication 1, comprenant en outre :
une pluralité d'unité d'impression (30a, 30b, ..., 30f) correspondant à ladite pluralité de contrôleurs d'unités respectivement, dans lequel
chacun de ladite pluralité de contrôleurs d'unités (20a, 20b, ..., 20f) est conçu pour transférer, par rapport à l'unité d'impression correspondante, au moins un ensemble de données de plaques séparées que la sortie d'impression prend en charge dans ladite unité d'impression.

3. Système d'impression selon la revendication 2, dans lequel
ledit serveur gestionnaire (10) possède des moyens de stockage de données de plaques séparées stockant ladite pluralité de données de plaques séparées créées dans ladite pluralité de contrôleurs d'unité (20), et
chacun desdits contrôleurs d'unités (20a, 20b, ..., 20f) est conçu pour transférer les données de plaques séparées stockées dans lesdits moyens de stockage de données de plaques séparées dudit serveur gestionnaire (10) vers ladite unité d'impression prévue en correspondance avec chaque contrôleur d'unité.

4. Système d'impression selon la revendication 3, dans lequel
ledit serveur gestionnaire (10) possède des moyens de surveillance surveillant les contenus des travaux de chacun de ladite pluralité de contrôleurs d'unités.

5. Procédé d'impression pour assurer l'impression sur la base de données numériques en utilisant un système d'impression comprenant un serveur gestionnaire (10), le procédé d'impression étant **caractérisé par** les étapes consistant à :
prévoir une pluralité de contrôleurs d'unité (20a, 20b, ..., 20f) entièrement gérés par ledit serveur gestionnaire (10) ;
générer, grâce audit serveur gestionnaire (10), une commande ayant une structure de données comprenant la destination de transmission et le contenu de transmission,
transmettre, selon ladite destination de transmission, ladite commande à l'au moins un de ladite pluralité de contrôleurs d'unités (20a, 20b, ..., 20f), et
créer au moins un ensemble de données de plaques séparées à partir de données numériques du sujet imprimé objectif dans ladite au moins une de ladite pluralité de contrôleurs d'unité (20a, 20b, ..., 20f), lesdites données de plaques séparées étant créées en séparant lesdites données numériques dudit sujet imprimé objectif en une pluralité de composantes chromatiques et en les rastérisant.
